# EUROPEAN PATENT APPLICATION

(11) **EP 2 391 096 A1**
(43) Date of publication of application: **30.11.2011**
(21) Application number: 10164326.0
(22) Date of filing: 28.05.2010
(51) Int. Cl.: H04M 1/02, G03B 15/04, H04M 1/21

(54) **External photoflash assembly for mobile phone**

(71) Applicant: Aprove Products Co., Ltd., Taichung 40854 (TW)
(72) Inventor: Cheng, Wei-Yuan, 632, Yulin County (TW)
(74) Representative: Becker Kurig Straus

(57) **Abstract**

An external photoflash assembly (10) is composed of a back cover (20), a control circuit (26), an illuminant (28), a battery (30), and an illuminant switch (32). The back cover (20) is fixed to a mobile phone (12). The control circuit (26), the illuminant (28), the battery (30), and the illuminant switch (32) are mounted onto the back cover (20) and electrically connected with one another. The illuminant (28) and the shutter button (123) of the mobile phone (12) are located at two sides of the mobile phone (12) separately and correspond to each other in position. When the shutter button (123) is pushed, the illuminant switch (32) can be pushed at the same time to activate the illuminant (28) for illumination to further improve the photographing quality.

## Description

### BACKGROUND OF THE INVENTION

### 1. Field of the Invention

The present invention relates generally to a mobile phone accessory, and more particularly, to an external photoflash assembly for a mobile phone.

### 2. Description of the Related Art

Most of the mobile phones each are equipped with a camera lens to have the function of photographing to meet users' needs. However, in consideration of power consumption and cost, such mobile phones are usually not equipped with any photoflash in such a way that their camera lenses can only be used for better photographing quality under the environment of sufficient light; otherwise, the insufficient light may cause worse photographing quality based on such camera lenses. Therefore, how to install a photoflash to the existing mobile phone to break through the use limitation for the conventional mobile phone has been being always the issue noted in the this industry.

### SUMMARY OF THE INVENTION

The primary objective of the present invention is to provide an external photoflash assembly, which can be mounted to a mobile phone and can be conveniently operated.

The foregoing objectives of the present invention are attained by the external photoflash assembly composed of a back cover, a control circuit, an illuminant, and a battery. The back cover includes a base portion and two lateral portions extending outward from two sides of the base portion. The control circuit is mounted to the back cover. The illuminant is electrically connected with the control circuit. The battery is electrically connected with the control circuit.

In an embodiment of the present invention, the two lateral portions of the back cover are arc-shaped in sectional view for covering two sides of the mobile phone. The external photoflash assembly further includes an illuminant switch and a master switch. The illuminant switch is electrically connected with the illuminant and the control circuit and located to correspond to a shutter button of the mobile phone. The control circuit is a printed circuit board mounted to the base portion of the back cover for mounting the illuminant, the battery, and the illuminant switch thereon. The master switch is electrically connected with the control circuit, the battery, and the illuminant. Besides, one of the lateral portions is provided with a switch hole or an elongated hole; the switch hole located to correspond to the master switch, and the elongated hole extends parallel to a long side of such lateral portion. The base portion is provided with a lens hole, an illuminant hole, and an arc-shaped hole; the lens hole corresponds to a camera lens of the mobile phone in size and location, the illuminant hole is adapted to receive the illuminant therein, and the arc-shaped hole runs through the base portion and is located to correspond to the illuminant switch. The illuminant has a plurality of LEDs of various colors. The control circuit includes a switchover circuit for switching the LEDs for the different colors.

In another embodiment, the external photoflash assembly further includes a charging terminal electrically connected with the battery. The control circuit, the illuminant, and the battery are mounted to the back cover via a plate member. The back cover includes two channels, two first convexities, and two second convexities. The first and second convexities are formed at the two channels. The plate member includes two extended ribs for insertion into the two channels respectively. Each of the extended ribs has a third convexity for engagement with the second convexity.

In another embodiment, the back cover further includes a slot and a through hole. The slot is adapted for insertion of the plate member. The through hole runs through the slot for the charging terminal to pass through.

In another embodiment, the control circuit further includes a wireless signal receiver.

### BRIEF DESCRIPTION OF THE DRAWINGS

FIG. 1 is an exploded view of a first preferred embodiment of the present invention.
FIG 2 is a perspective view of the first preferred embodiment of the present invention to be mounted to a mobile phone.
FIG. 3 is another exploded view of the first preferred embodiment of the present invention.
FIG. 4 is an exploded view of a second preferred embodiment of the present invention.
FTG 5 is a perspective view of a part of the second preferred embodiment of the present invention.
FIG. 6 is an enlarged view of a part of the plate member in accordance with the second preferred embodiment of the present invention.
FIG. 7 is an enlarged view of a part of the back cover in accordance with the second preferred embodiment of the present invention.
FIG. 8 is an exploded view of a third preferred embodiment of the present invention.
FIG. 9 is a perspective view of the fourth preferred embodiment of the present invention to be mounted to a mobile phone.

### DETAILED DESCRIPTION OF PREFERRED EMBODIMENTS

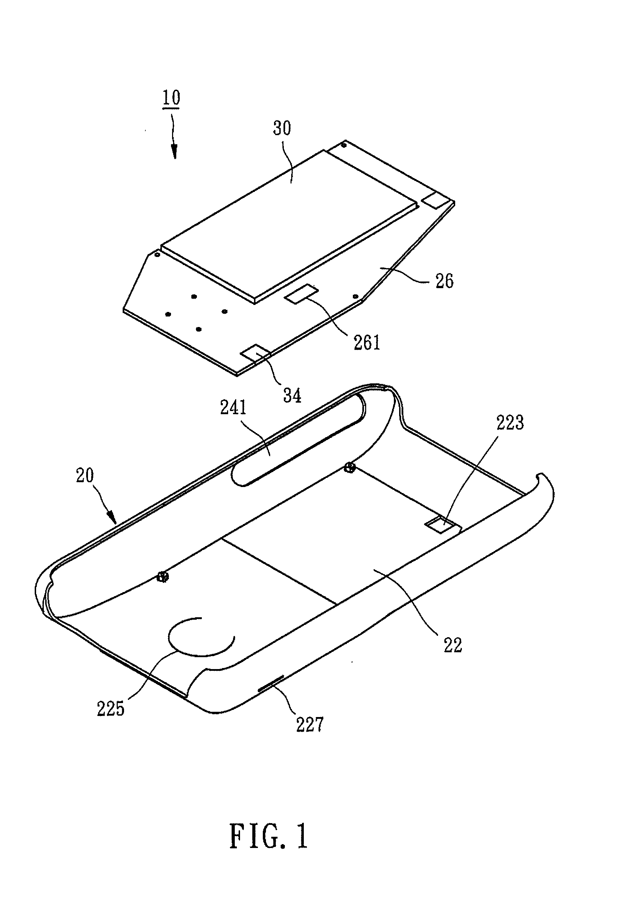

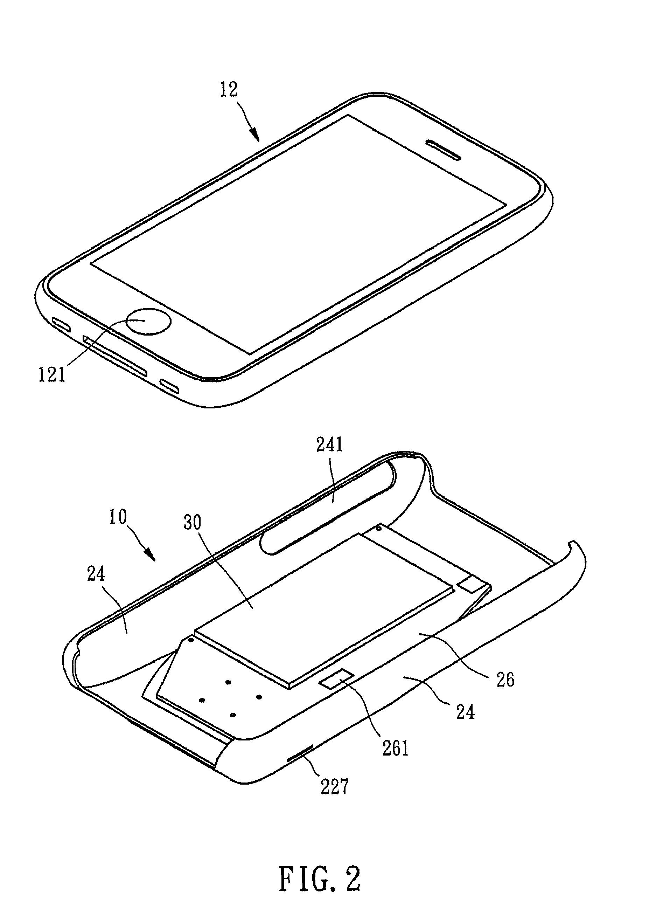

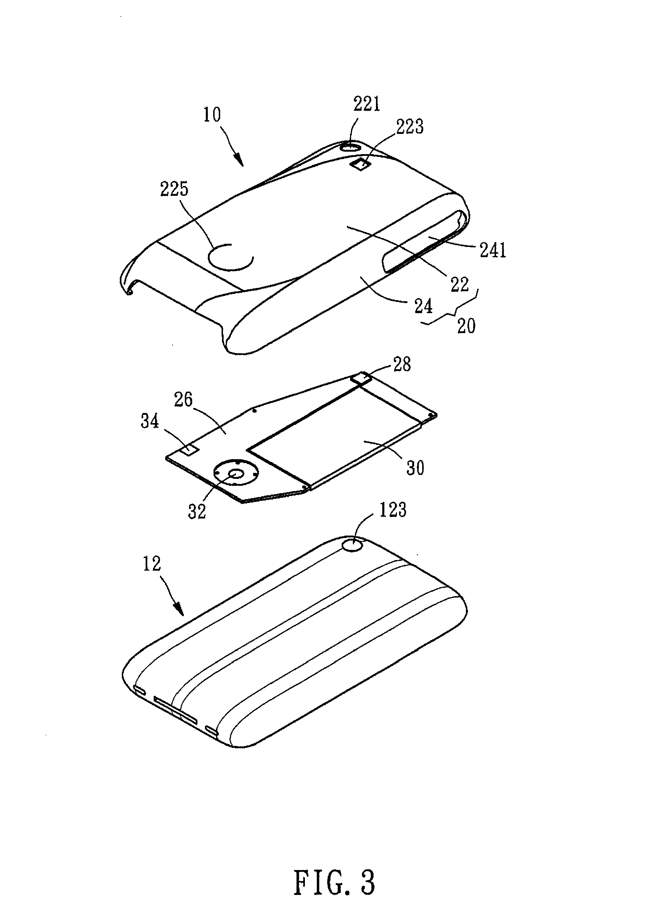

Referring to FIGS. 1-3, an external photoflash assembly 10 for a mobile phone 12 in accordance with a first preferred embodiment of the present invention is composed of a back cover 20, a control circuit 26, an illuminant 28, a battery 30, an illuminant switch 32, and a master switch 34. The mobile phone 12 includes a shutter button 121 mounted to a top side thereof, and a camera lens 123 mounted to a bottom side thereof. The detailed descriptions and operations of these elements as well as their interrelations therebetween are recited in the respective paragraphs as follows.

The back cover 20 is mounted to an external periphery of the mobile phone 12 and includes a base portion 22 and two lateral portions 24. The base portion 22 has a lens hole 221, an illuminant hole 223, and an arc-shaped hole 225. The lens hole 221, the illuminant hole 223, and the arc-shaped hole 225 all run through a top side and a bottom side of the back cover 20. The lens hole 221 corresponds to the camera lens 123 in size and location. The two lateral portions 24 is arc-shaped in sectional view, extending outward from two sides of the base portion 22, for covering two sides of the mobile phone 12. One of the two lateral portions 24 has an elongated hole 241 extending parallel to a long side thereof for the insertion of other button switches (not shown) of the mobile phone 12. The other lateral portion 24 has a switch hole 227.

The control circuit 26 is a printed circuit board and mounted to an internal side of the base portion 24, having a switchover circuit 261.

The illuminant 28 is fixed onto the circuit board 26, electrically connected with the control circuit 26, and received in the illuminant hole 223. In this embodiment, the illuminant 28 has a plurality of light emitting diodes (LEDs) having different colors. Such LEDs can be replaced by a xenon lamp.

The battery 30 is fixed onto the control circuit 26 and electrically connected with the control circuit 26.

The illuminant switch 32 is fixed onto the control circuit 26 and electrically connected with the control circuit 26 for the user to push so as to control the timing of illumination thereof. The illuminant switch 32 and the shutter button 121 are located at the top and bottom sides of the mobile phone 12 separately, corresponding to each other in position to facilitate the user to push the illuminant switch 32 and the shutter button 121 at the same time. Besides, the arc-shaped hole 225 corresponds to the illuminant switch 32 in position and a part of the base portion 24 that the arc-shaped hole 225 surrounds is subject to deformation resulting from an external force, thus facilitating the user to activate the illuminant switch 32.

The master switch 34 is fixed onto the control circuit 26 and electrically connected with the control circuit 26, the battery 30, and the illuminant 28, for cutting off the power source for the control circuit 26 and the illuminant 28 in whole. The master switch 34 corresponds to the switch hole 227 in position to facilitate the user to operate.

In light of the above structure, the user can sleeve the back cover 20 of the external photoflash assembly 10 onto the mobile phone 12. When it is intended to take a photo, the user can turn on the master switch 34 and then push the shutter button 12 and the illuminant switch 32 at the same time to enable the illuminant 28 to illuminate what is being photographed while the camera lens 123 is taking a photo of it, further improving the photographing quality based on the camera lens 123. The switchover circuit 261 can switch the LEDs of the illuminant 28 for different colors, so the user can push and hold the illuminant switch 32 for a while to activate the switchover circuit 261 to further adjust the illuminative colors of the illuminant 28.

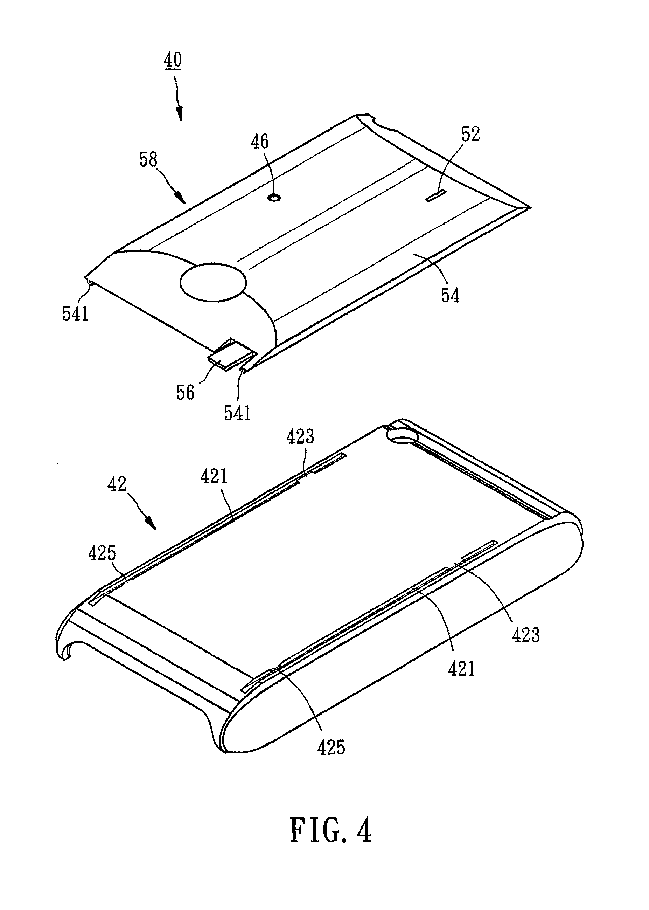

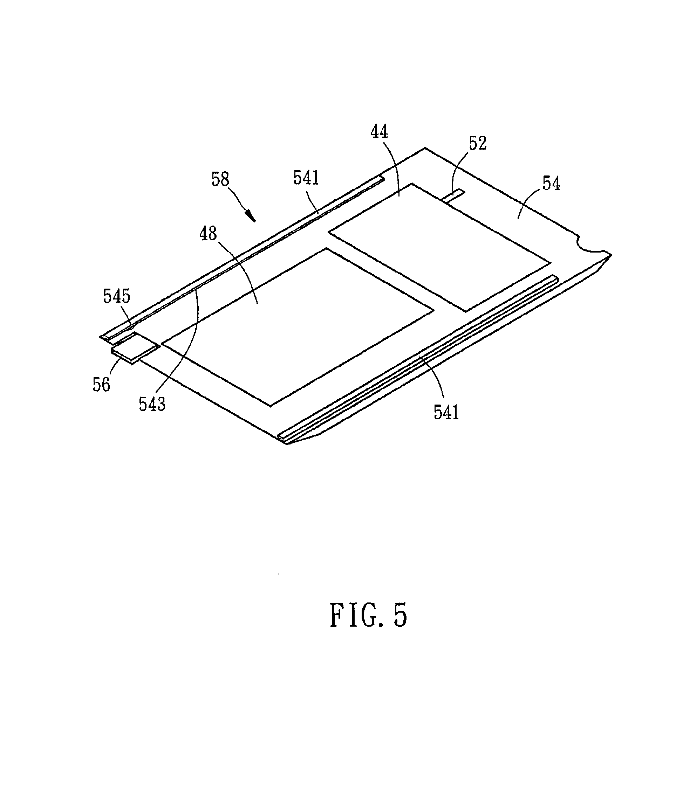

In light of the spirit of the present invention, the external photoflash assembly can be structurally modified. Referring to FIGS. 4-5, an external photoflash assembly 40 constructed according to a second preferred embodiment of the present invention is similar to that of the first embodiment but different in that the external photoflash assembly 40 further includes a plate member 54 and a charging terminal 56. Similarly, the detailed descriptions and operations of these elements as well as their interrelations therebetween are recited in the respective paragraphs as follows.

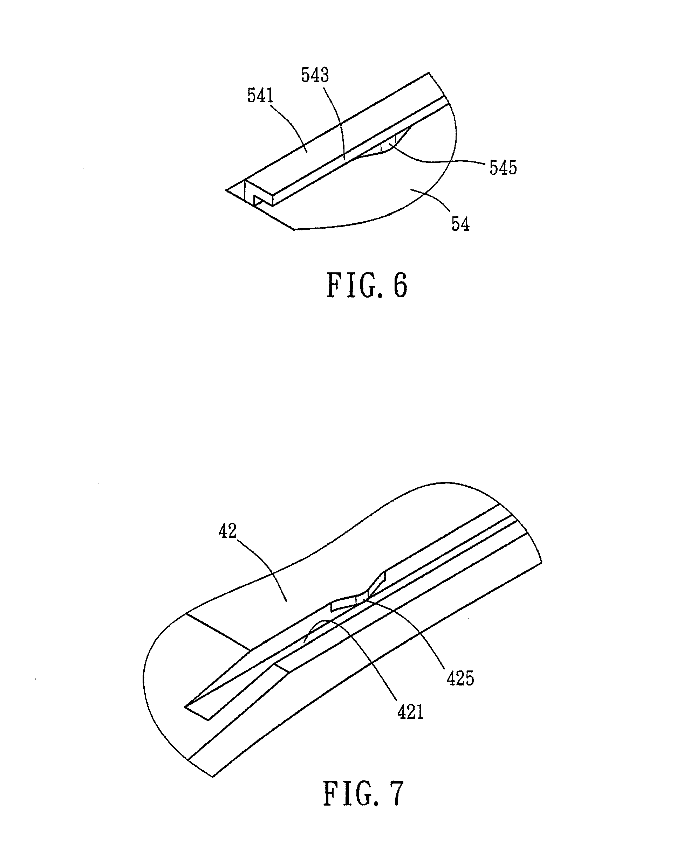

The plate member 54 is adapted to mount the control circuit 44, the illuminant 46, the battery 48, the illuminant switch 50, and the master switch 52 thereon. The back cover 42 has two channels 421, two first convexities 423, and two second convexities 425 (FIG. 7) on an external side thereof. The two channels 421 are parallel to each other. The first and second convexities 423 and 425 are formed symmetrically on respective sidewalls of the two channels 421. The plate member 54 is provided with two extended ribs 541 at a bottom side thereof. Each of the extended ribs 541 has a lock portion 543 and a third convexity 545 (FIG 6); the lock portions 543 are adapted to be stopped against the first convexities 423 and the third convexity 545 is adapted to be stopped against the second convexities 425 in such a way that the plate member 54 can be prevented from disengagement from the back cover 42.

The charging terminal 56 is electrically connected with the battery 48 and the control circuit 44 to facilitate connection with a power supply (not shown) for charging.

The plate member 54, the control circuit 44, the illuminant 46, the battery 48, the illuminant switch 50, and the master switch 52 can be assembled to constitute a replacement set 58. Because the plate member 54 is detachably connected with the back cover 42, the user can purchase a number of the replacement sets 58 as spare parts to facilitate replacing the replacement set 58 while the battery 48 is dead or according to the ambient environment and the illuminative colors of the illuminants 46.

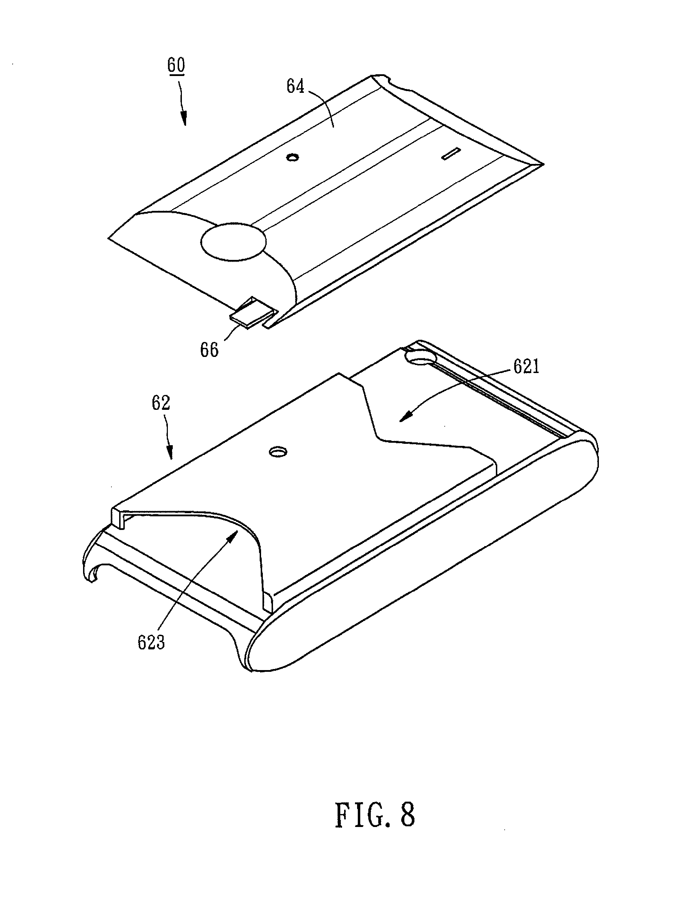

Referring to FIG. 8, an external photoflash assembly 60 constructed according to a third preferred embodiment of the present invention is similar to that of the aforesaid embodiment but different in that the back cover 62 includes a slot 621 and a through hole 623; the slot 621 is adapted for insertion of the plate member 64, and the through hole 623 runs through the slot 621 for the charging terminal 66 to pass through to facilitate charging.

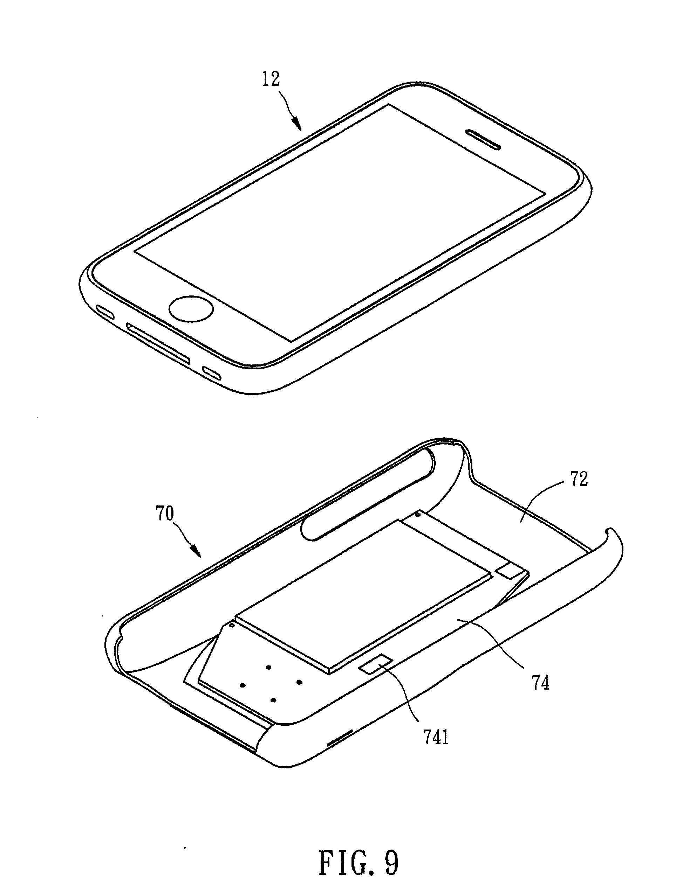

Referring to FIG. 9, an external photoflash assembly 70 constructed according to a fourth preferred embodiment of the present invention is similar to that of the aforesaid embodiment but different in that the external assembly 70 further includes a wireless signal receiver 741, which has the same transmission interface, such as Bluetooth, as that (not shown) of the mobile phone 12 for receiving wireless signals issued from the mobile phone 12. When the user operates the mobile phone 12 to take a photo, the mobile phone 12 can synchronically transmit a signal to the wireless signal receiver 741 to further drive the illuminant (not shown) to illuminate. The external photoflash assembly 70 does not include the aforesaid illuminant switch.

Although the present invention has been described with respect to specific preferred embodiments thereof, it is in no way limited to the specifics of the illustrated structures but changes and modifications may be made within the scope of the appended claims.

## Claims

1. An external photoflash assembly (10) for a mobile phone (12), the mobile phone (12) having a shutter button (121) and a camera lens (123);
**characterized in that** the external photoflash assembly (10) comprises:
a back cover (20) having a base portion (22) and two lateral portions (24), the two lateral portions (24) extending outward from two sides of the base portion (22);
a control circuit (26) mounted to the back cover (20);
an illuminant (28) electrically connected with the control circuit (26); and
a battery (30) electrically connected with the control circuit (26).

2. The external photoflash assembly (10) as defined in claim 1, **characterized in that** the two lateral portions (24) are arc-shaped in sectional view for covering two sides of the mobile phone (12).

3. The external photoflash assembly (10) as defined in claim 1, **characterized in that** it further comprises an illuminant switch (32), wherein the illuminant switch (32) is electrically connected with the illuminant (28) and the control circuit (26) and corresponds to the shutter button (121) of the mobile phone (12) in position.

4. The external photoflash assembly (10) as defined in claim 3, **characterized in that** the control circuit (26) is a printed circuit board and mounted to the base portion (22) of the back cover (20) for mounting the illuminant (28), the battery (30), and the illuminant switch (32) thereon.

5. The external photoflash assembly (10) as defined in claim 3, **characterized in that** it further comprises a master switch (34), wherein the master switch (34) is electrically connected with the control circuit (26), the battery (30), and the illuminant (28).

6. The external photoflash assembly (10) as defined in claim 5, **characterized in that** one of the lateral portions (24) comprises a switch hole (227) corresponding to the master switch (34) in position.

7. The external photoflash assembly (10) as defined in claim 3, **characterized in that** the base portion (22) comprises an arc-shaped hole (225) running therethrough and corresponding to the illuminant switch (32) in position.

8. The external photoflash assembly (10) as defined in claim 1, **characterized in that** the back cover (20) comprises an elongated hole (241) formed at one of the lateral portions (24) and extending parallel to a long side of such lateral portion (24).

9. The external photoflash assembly (10) as defined in claim 1, **characterized in that** the base portion (22) comprises a lens hole (221) corresponding to the camera lens (123) of the mobile phone (12) in size and location; (and/or) **characterized in that** the base portion (22) comprises an illuminant hole (223) for receiving the illuminant (28) therein;
(and/or) **characterized**
**in that** the illuminant (28) comprises a plurality of LEDs of various colors; the control circuit (26) comprises a switchover circuit (261) for switching the LEDs;
(and/or) **characterized in that** it further comprises a charging terminal (56), wherein the charging terminal (56) is electrically connected with the battery (48).

10. The external photoflash assembly (40) as defined in claim 1, **characterized in that** the control circuit (44) is mounted to the back cover (42) via a plate member (54); the illuminant (46) and the battery (48) are mounted onto the plate member (54).

11. The external photoflash assembly (40) as defined in claim 10, **characterized in that** the back cover (42) comprises two channels (421) and two first convexities (423) mounted to respective sidewalls of the channels (421); the plate member (54) comprises two extended ribs (541) for insertion into the two channels (421), each of the extended ribs (541) having a lock portion (543) stopped against one of the two first convexities (423).

12. The external photoflash assembly (40) as defined in claim 11, **characterized in that** the back cover (42) further comprises two second convexities (425) mounted to the respective sidewalls of the two channels (421); each of the extended ribs (541) comprises a third convexity (545), the third convexities (545) being stopped against the second convexities (425) respectively.

13. The external photoflash assembly (60) as defined in claim 10, **characterized in that** the back cover (62) further comprises a slot (621) for insertion of the plate member (64) therein.

14. The external photoflash assembly (60) as defined in claim 13, **characterized in that** it further comprises a charging terminal (66), wherein the charging terminal (66) is electrically connected with the battery; the back cover (62) further comprises a through hole (621) running through the slot (621) for the charging terminal (66) to pass through.

15. The external photoflash assembly (70) as defined in claim 1, **characterized in that** the control circuit (74) further comprises a wireless signal receiver (741).
